# EUROPÄISCHE PATENTSCHRIFT

(11) **EP 1 349 229 B1**
(45) Veröffentlichungstag und Bekanntmachung des Hinweises auf die Patenterteilung: **07.05.2008**
(21) Anmeldenummer: 03004052.1
(22) Anmeldetag: 25.02.2003
(51) Int. Cl.: H01M 2/10

(54) **Vorrichtung zur Formation flacher galvanischer Elemente**
Apparatus for mounting flat galvanic elements
Appareil pour arranger des éléments galvaniques plats

(30) Priorität: 27.03.2002 DE 10213685
(43) Veröffentlichungstag der Anmeldung: 01.10.2003
(73) Patentinhaber: VARTA Microbattery GmbH, 30419 Hannover (DE)
(72) Erfinder: Hald, Rainer, 73479 Ellwangen (DE); Zeberer, Markus, 86720 Nördlingen (DE); Haake, Thomas, 91550 Dinkelsbühl (DE); Ilic, Dejan, 73479 Ellwangen (DE)
(74) Vertreter: Patentanwälte Ruff, Wilhelm, Beier, Dauster & Partner

(56) Entgegenhaltungen:
- WO-A-01/84649
- DE-A1- 10 103 318
- US-A- 5 460 904
- US-A- 6 006 439

## Beschreibung

Gegenstand der Erfindung ist eine Vorrichtung zur Formation flacher galvanischer Elemente, auch Flachzellen genannt.

Wiederaufladbare galvanische Elemente, insbesondere Lithium/ lonenzellen, enthalten in vielen Fällen einen Zellenstapel, der aus mehreren Einzelelementen besteht. Die Einzelzellen oder Einzelelemente, aus denen ein solcher Zellenstapel zusammengesetzt ist, sind ein Laminat, das aus Ableitern, aktivem Elektrodenfilm und Separator erzeugt wird. Derartige Laminate aus fest verbundenen Einzelelementen werden insbesondere als sogenannte Bizellen mit den möglichen Sequenzen negative Elektrode / Separator / positive Elektrode / Separator / negative Elektrode oder positive Elektrode / Separator / negative Elektrode / Separator / positive Elektrode hergestellt.

Im Dokument US 5,460,904 sind Verfahren zur Herstellung von solchen wiederaufladbaren Lithium/lonenzellen beschrieben. Bei diesen Verfahren werden aktive Materialien und Zusätze, wie gegebenenfalls Leitfähigkeitsverbesserer in den Elektroden oder Stabilisatoren im Separator, ein spezielles Copolymer, beispielsweise Polyvinylidendifluorid-Hexafluorpropylen (PVDF-HFP), sowie Anteile eines Weichmachers, in vielen Fällen Dibuthylphthalat (DBP), nach Hinzugabe von Aceton zum Lösen des Copolymers intensiv gemischt und zu einer Folie ausgezogen. Die so gebildeten Elektrodenfolien und Separatorfolien werden in mehreren Laminationsprozessen zu den vorgenannten Bizellen verarbeitet. Mehrere Bizellen werden zu einem Stapel aufgeschichtet. Der Stapel wird nach Einlegen in einen Behälter aus beispielsweise tiefgezogener Aluminiumverbundfolie, Befüllen mit Elektrolyt, Versiegeln mit einem Deckel, Formation und Endverschluss zu einer fertigen Zelle verarbeitet.

Die Formation einer großen Anzahl solcher Flachzellen erfordert aufwendige Vorrichtungen, in denen die Ableiter bzw. elektrischen Anschlüsse der Zellen während der Formation elektrisch kontaktiert und die Zellen gehaltert werden. Beispielsweise werden derartige Flachzellen liegend gelagert, und auf die Ableiter, mit denen die einzelnen Flachzellen versehen sind, werden Kontaktstifte aufgedrückt. Bei Änderung der Konfiguration oder der Abstände der Ableiter sind aufwendige Umbauten und Anpassungen der Vorrichtung notwendig.

Der Erfindung liegt die Aufgabe zugrunde, eine Formationsvorrichtung für eine Vielzahl von flachen galvanischen Elementen, insbesondere von Flachzellen wie Lithium/Ionenzellen, zu schaffen, die dazu geeignet ist, eine große Anzahl von Elementen gleichmäßig dem Formationsprozess zu unterwerfen, und die insbesondere ohne besondere Umbauten die Formation von Elementen mit verschiedenen Konfigurationen der Ableiterfahnen der Elemente ermöglicht.

Diese Aufgabe wird erfindungsgemäß durch eine Formationsvorrichtung für flache galvanische Elemente, insbesondere für Lithium/Ionenzellen, mit den Merkmalen des Anspruchs 1 gelöst. In den Unteransprüchen sind vorteilhafte Ausgestaltungen der Erfindung angegeben. Der Wortlaut der Ansprüche wird durch ausdrückliche Bezugnahme zum Inhalt der Beschreibung gemacht.

Erfindungsgemäß wird eine Vielzahl von flachen Elementen nebeneinander in an den Zellenquerschnitt angepasste Ausnehmungen einer Halterung der Vorrichtung eingesetzt. Dabei weisen die Ableiterfahnen der Flachzellen in eine Richtung und liegen an Kontakten an, die auf Trägervorrichtungen angeordnet sind und die vorteilhaft plattenförmig sein können. Sie können auch eingeklemmt sein. Die Kontakte liegen insbesondere beidseitig an den Ableiterfahnen an. Die Kontakte besitzen eine gegenüber der Breite der Ableiter wesentlich vergrößerte Kontaktfläche.

Die Kontakte können Kontaktfedern sein. Die galvanischen Elemente können dabei Lithium/Ionenzellen der eingangs beschriebenen Art sein.

Im Folgenden ist die erfindungsgemäße Formationsvorrichtung anhand der schematisch gehaltenen Figuren näher erläutert:
Figur 1 zeigt die Kontaktierung einer Flachzelle in konventioneller Weise,
Figuren 2, 3 und 4 zeigen erfindungsgemäße Kontaktierungsanordnungen, und
Figur 5 zeigt eine Formationsvorrichtung gemäß der Erfindung.

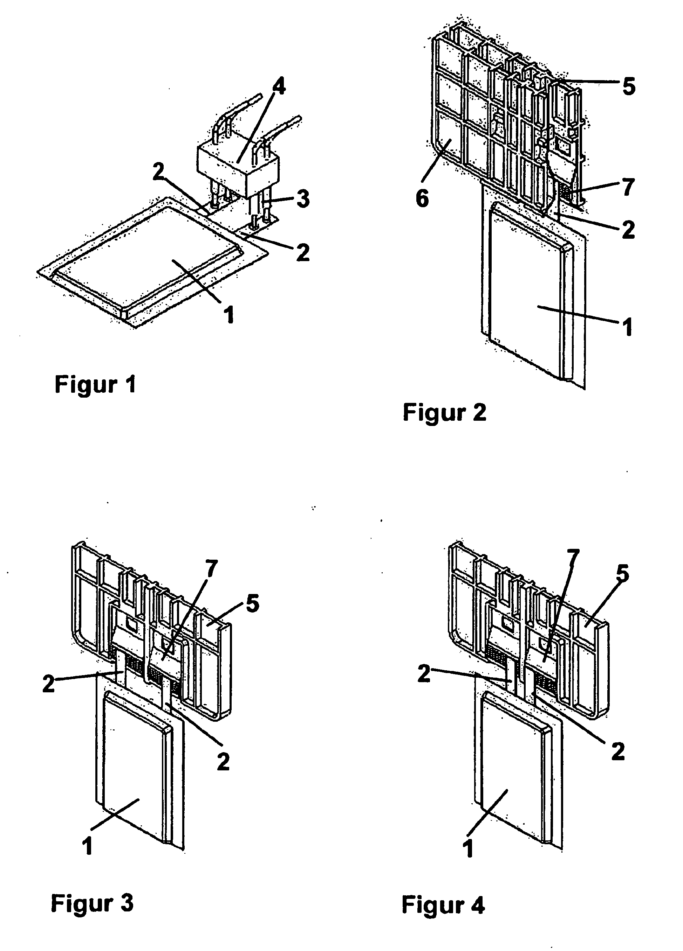

Gemäß Figur 1 ist eine Flachzelle 1 mit Ableiterfahnen 2 in konventioneller Weise über Kontaktstifte 3 mit einer schematisch dargestellten Stromversorgung 4 verbunden.

Figur 2 zeigt die gleiche Flachzelle 1 mit Ableitern 2, die zwischen geöffnet dargestellten Halterungen 5 und 6 angeordnet sind. Mindestens eine der Halterungen 5, 6, vorzugsweise beide Halterungen 5, 6, trägt Kontaktfedern 7. Die Kontaktfedern 7 sind die beidseitig auf die Ableiterfahnen 2 aufpressbar und gegenüber den Abmessungen der Ableiterfahne 2 großflächig ausgebildet.

Durch die großflächige Ausbildung der Kontaktfedern 7 wird es ermöglicht, wie aus den Figuren 3 und 4 ersichtlich ist, eine Vielzahl von Zellvarianten in der gleichen Vorrichtung zu prüfen. Eine Vielzahl von unterschiedlichen Ableiterabständen ist nämlich möglich, ohne die eigentlichen Kontaktfedern 7 zu ändern. Wie die Figuren 3 und 4 als Beispiel zeigen, können sowohl Ableiterfahnen 2 mit sehr kleinem Abstand als auch Ableiterfahnen 2 mit sehr großem Abstand über die gleichen Kontaktfedern 7 kontaktiert werden.

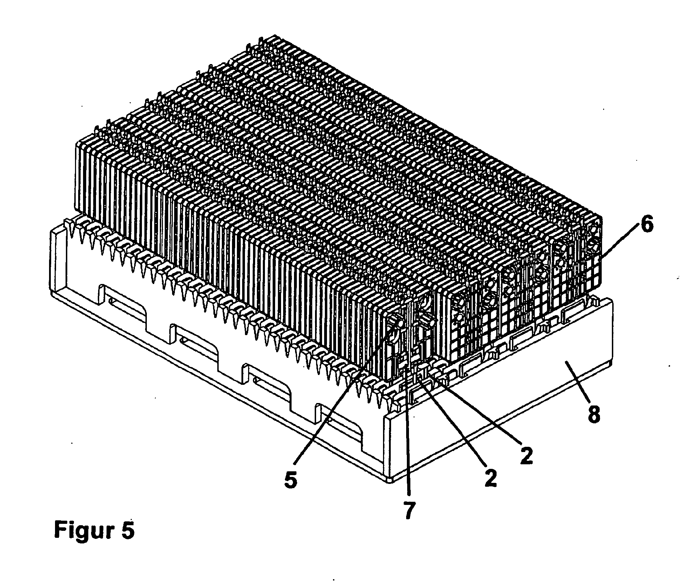

In Figur 5 ist eine erfindungsgemäße Formationsvorrichtung dargestellt, die eine Halterung 8 für eine Vielzahl von nebeneinander angeordneten Flachzellen 1 ist. Die einzelnen Flachzellen 1 sind dabei in Ausnehmungen in der Halterung 8 angeordnet, die dem Querschnitt der Flachzellen angepasst sind. Dabei sind die Ableiterfahnen 2 so angeordnet, dass sie sämtlich in eine Richtung, insbesondere nach oben, weisen. Diese Ableiterfahnen 2 sind während der Formation zwischen den flächigen Kontaktfedern 7 eingeklemmt.

Durch die erfindungsgemäß großflächig ausgebildeten Kontaktfedern 7 ist es möglich, wie bereits erwähnt, eine Vielzahl von Flachzellen mit verschiedenen Größen und Abständen der Ableiterfahnen 2 zu kontaktieren. So entfallen die Investitionskosten für zusätzliche Kontaktierungseinheiten und Lagerungskosten für solche Einheiten. Darüber hinaus sind in der Fertigung keine hohen Umrüstzeiten erforderlich, und die Formationsvorrichtung passt sich flexibel an verschiedene Zellengestaltungen an. Durch die beidseitige Kontaktierung der Ableiterfahnen wird ein sicherer Kontakt ohne hohen Platzbedarf ermöglicht.

## Patentansprüche

1. Vorrichtung zur Formation flacher galvanischer Elemente (1), **gekennzeichnet durch** eine Halterung (8) mit einer Vielzahl von an den Querschnitt der Elemente angepassten Ausnehmungen für die Elemente, wobei die Vorrichtung Trägervorrichtungen (5, 6) mit Kontakten (7) aufweist, wobei eine Vielzahl von Elementen nebeneinander in die Ausnehmungen eingesetzt ist und wobei die Elemente (1) Ableiterfahnen (2) aufweisen und diese Ableiterfahnen in eine Richtung weisen und an den Kontakten (7) anliegen.

2. Vorrichtung nach Anspruch 1, **dadurch gekennzeichnet, dass** die Kontakte Kontaktfedern (7) sind, vorzugsweise plattenförmig oder flächig.

3. Vorrichtung nach Anspruch 1 oder 2, **dadurch gekennzeichnet, dass** die Ableiterfahnen (2) an, insbesondere zwischen, den Kontakten (7) eingeklemmt sind.

4. Vorrichtung nach einem der vorhergehenden Ansprüche, **dadurch gekennzeichnet, dass** Kontakte (7) jeweils beidseitig an den Ableiterfahnen (2) anliegen.

5. Vorrichtung nach einem der vorhergehenden Ansprüche, **dadurch gekennzeichnet, dass** die Kontakte (7) eine gegenüber der Breite oder Fläche der Ableiter (2) wesentlich vergrößerte Kontaktfläche besitzen.

## Claims

1. An apparatus for forming flat galvanic elements (1), **characterised by** a holder (8) having a large number of recesses for accommodating said elements, wherein said recesses have been adapted to suit a cross-section of said elements, said apparatus has support holders (5, 6) with contacts (7), a large number of said elements are inserted into said recesses side by side, and said elements (1) have conductor tabs (2) and said conductor tabs point in the same direction and contact said contacts (7).

2. The apparatus according to claim 1, **characterised in that** said contacts are contacting springs (7), preferably in the form of plates or planes.

3. The apparatus according to claim 1 or 2, **characterised in that** said conductor tabs (2) are clamped, in particular between said contacts (7).

4. The apparatus according to one of the preceding claims, **characterised in that** said contacts (7) contact both sides of said conductor tabs (2).

5. The apparatus according to one of the preceding claims, **characterised in that** said contacts (7) have contacting surfaces that are substantially larger than the width or surface area of the conductors (2).

## Revendications

1. Dispositif pour former des éléments galvaniques plats (1), **caractérisé par** un support (8) avec une pluralité d'évidements pour les éléments, adaptés à la section des éléments, le dispositif présentant des dispositifs porteurs (5, 6) avec des contacts (7), une pluralité d'éléments étant insérée en juxtaposition dans les évidements, les éléments (1) présentant des languettes de conducteurs (2) et ces languettes de conducteurs étant dirigées dans une direction et étant appliquées sur les contacts (7).

2. Dispositif selon la revendication 1, **caractérisé en ce que** les contacts sont des ressorts de contact (7), de préférence en forme de plaque ou plats.

3. Dispositif selon la revendication 1 ou 2, **caractérisé en ce que** les languettes de conducteurs (2) sont serrées sur, en particulier entre, les contacts (7).

4. Dispositif selon l'une des revendications précédentes, **caractérisé en ce que** les contacts (7) sont appliqués chaque fois des deux côtés sur les languettes de conducteurs (2).

5. Dispositif selon l'une des revendications précédentes, **caractérisé en ce que** les contacts (7) possèdent une surface de contact sensiblement agrandie par rapport à la largeur ou la surface des conducteurs (2).
